(19) Europäisches Patentamt
European Patent Office
Office européen des brevets

(11) Veröffentlichungsnummer: **0 005 795**
**B1**

(12) # EUROPÄISCHE PATENTSCHRIFT

(45) Veröffentlichungstag der Patentschrift: **24.03.82**

(51) Int. Cl.³: **C 09 D 3/76**, C 08 L 31/04

(21) Anmeldenummer: **79101585.2**

(22) Anmeldetag: **23.05.79**

(54) **Wässrige Kunststoffdispersion auf Basis von Vinylesterpolymeren, Verfahren zu ihrer Herstellung und daraus hergestelltes Anstrichmittel.**

(30) Priorität: **29.05.78 DE 2823301**

(43) Veröffentlichungstag der Anmeldung: **12.12.79 Patentblatt 79/25**

(45) Bekanntmachung des Hinweises auf die Patenterteilung: **24.03.82 Patentblatt 82/12**

(84) Benannte Vertragsstaaten: **AT BE CH DE FR GB IT LU NL SE**

(56) Entgegenhaltungen:
**US-A-3 639 325**

(73) Patentinhaber: **HOECHST AKTIENGESELLSCHAFT**, ***Postfach 80 03 20, D-6230 Frankfurt/Main 80 (DE)***

(72) Erfinder: **Nölken, Ernst, Dr., Dachbergstrasse 16a, D-6232 Bad Soden am Taunus (DE)**
Erfinder: **Oesterlin, Hans Georg, Dr., Walter-Kollo-Strasse 41, D-6232 Bad Soden am Taunus (DE)**

**EP 0 005 795 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Wässrige Kunststoffdispersion auf Basis von Vinylesterpolymeren, Verfahren zu ihrer Herstellung und daraus hergestelltes Anstrichmittel

Es ist bekannt, dass wässrige Polyvinylester-Dispersionen als Bindemitteldispersionen in Dispersionsfarben und Papierstreichmassen geeignet sind; solche Polyvinylester-Dispersionen werden beispielsweise durch Polymerisation von Vinylestern — gegebenenfalls in Kombination mit modifizierenden Comonomeren — in wässriger Dispersion und in Anwesenheit eines anionischen Emulgators bei einem während der Polymerisationsdauer konstant zu haltenden pH-Wert von 4 bis 6,8 hergestellt (vgl. deutsche Offenlegungsschrift 2 546 782).

Weiterhin sind Papierstreichmassen beschrieben, die alkalische Kaseinlösungen und wässrige Polymerisatdispersionen enthalten, die durch Emulsionspolymerisation von Gemischen aus wasserunlöslichen, verseifbaren, äthylenisch ungesättigten Monomeren und wasserlöslichen, äthylenisch ungesättigten Monomeren in einem pH-Bereich von 3 bis 6,5 hergestellt worden sind; als wasserunlösliche Monomere sind beispielsweise Vinylacetat und Vinylpropionat erwähnt. Diese Streichmassen haben im allgemeinen einen pH-Wert zwischen 8 und 12 und einen Feststoffgehalt zwischen 35 und 65 Gewichtsprozent, wobei der Polymerisatanteil des Gesamtfeststoffgehalts 5 bis 30 Gewichtsprozent beträgt und der Pigmentanteil gegebenenfalls zwischen 50 und 90 Gewichtsprozent liegt (vgl. deutsche Auslegeschrift 1 197 743).

Ferner sind Beschichtungsmassen für Papier bekannt, die ein mineralisches Pigment, Stärke, ein Butadien-Copolymer und als Stabilisator eine alkalische Lösung eines Copolymers aus Styrol und Maleinsäureanhydrid oder einem Alkylester oder Halbamid der Maleinsäure enthalten, wobei das Styrol-Copolymer 0,5 bis 2 Mol Maleinsäureanteile pro Mol Styrolanteil enthalten soll (vgl. US-Patentschrift 3 259 596).

Aufgabe der Erfindung ist die Schaffung einer wässrigen Kunststoffdispersion auf Basis von Vinylesterpolymeren, die ein hohes Pigmentbindevermögen aufweist und als Bindemitteldispersion, vor allem für Dispersionsfarben oder Papierstreichmassen, geeignet ist.

Die Erfindung betrifft eine wässrige Kunststoffdispersion auf Basis eines Vinylester-Polymers und ist dadurch gekennzeichnet, dass die Kunststoffdispersion ein wasserlösliches Salz eines Copolymers aus Styrol und Maleinsäureanhydrid oder einem Halbester oder Halbamid der Maleinsäure enthält, wobei das genannte Copolymer Styroleinheiten und Comonomereinheiten im Verhältnis von 1,5 : 1 bis 6 : 1 aufweist.

Die Erfindung betrifft ferner ein Verfahren zur Herstellung einer wässrigen Kunststoffdispersion auf Basis eines Vinylester-Polymers, das dadurch gekennzeichnet ist, dass ein Vinylester — gegebenenfalls in Kombination mit einem copolymerisationsfähigen weiteren Monomer — unter an sich bekannten Bedingungen in wässriger Dispersion polymerisiert wird und die erhaltene Dispersion mit einer wässrigen Lösung eines Salzes eines Copolymers aus Styrol und Maleinsäure oder einem Halbester oder Halbamid der Maleinsäure vermischt wird, wobei das genannte Copolymer Styroleinheiten und Comonomereinheiten im Verhältnis von 1,5 : 1 bis 6 : 1 aufweist.

Es ist vorteilhaft, wenn die Kunststoffdispersion auch ein Dispergierhilfsmittel enthält. Hierfür eignen sich beispielsweise Salze der Poly(acrylsäure), Poly(methacrylsäure), Poly(vinylsulfonsäure) oder Polyphosphorsäure, z.B. Natriumtripolyphosphat, sowie insbesondere phosphororganische Verbindungen mit 1, 2, 3 oder 4 Phosphonogruppen [-PO(OH)$_2$], vorzugsweise Phosphonoalkane und Phosphonomethyl-amine. Unter «Phosphono-alkan» sind hierbei sowohl Monophosphono-alkane als auch Disphono-alkane sowie deren Teilester mit aliphatischen Alkoholen, vorzugsweise Alkanolen mit 6 bis 24 Kohlenstoffatomen, zu verstehen. Unter «Phosphonomethylamin» werden verstanden tertiäre aliphatische Amine mit 2 oder 3 Phosphonomethyl-gruppen und aliphatische $\alpha,\omega$-Diamine mit jeweils 2 Phosphonomethyl-gruppen an den Stickstoffatomen.

Monophosphono-alkane sind Verbindungen der Formel (I)

(I) 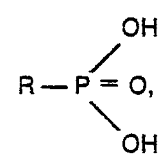

in der R einen — vorzugsweise linearen — Alkylrest mit 6 bis 24, vorzugsweise 8 bis 18 Kohlenstoffatomen bedeutet, der mit einem Phenyl-, Hydroxyl- oder Carboxylrest substituiert sein kann. Beispiele sind n-Hexanphosphonsäure, n-Octanphosphonsäure, n-Nonanphosphonsäure, n-Decanphosphonsäure, n-Dodecanphosphonsäure, n-Tetradecanphosphonsäure und n-Hexadecanphosphonsäure. Die Alkanphosphonsäuren werden hergestellt durch Umlagerung von Trialkylphosphiten oder Umsetzung von Dialkylphosphiten mit Olefinen in Gegenwart von Peroxiden und anschliessende vollständige Hydrolyse der erhaltenen Alkanphosphonsäurediester.

Teilester von Monophosphono-alkanen sind Verbindungen der Formel (II)

(II) 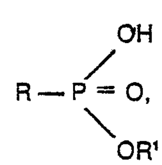

wobei R einen — vorzugsweise linearen — Alkylrest mit 6 bis 24, vorzugsweise 8 bis 18 Kohlenstoffatomen, der mit einem Phenyl-, Hydroxyl- oder Carboxylrest substituiert sein kann, und $R^1$ einen — vorzugsweise linearen — Alkylrest mit 1 bis 8, vorzugsweise 1 bis 4 Kohlenstoffatomen bedeuten. Beispiele sind die Monomethylester, Monoethylester, Monopropylester und Mono-n-butylester der obengenannten Alkanphosphonsäuren. Die Alkanphosphonsäuremonoalkylester werden durch Teilhydrolyse der vorerwähnten Alkanphosphonsäurediester hergestellt (vgl. zum Beispiel deutsche Patentschrift 2 441 783).

Diphosphono-alkane sind Verbindungen der Formel (III)

(III) 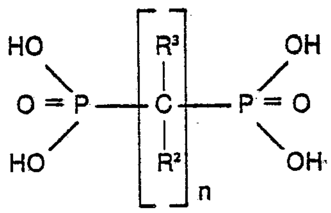

in der $R^2$ ein Wasserstoffatom oder einen Alkylrest mit 1 bis 8 Kohlenstoffatomen, $R^3$ ein Wasserstoffatom, eine Hydroxylgrupe oder einen Alkylrest mit 1 bis 8 Kohlenstoffatomen und n eine ganze Zahl von 1 bis 10, vorzugsweise 1, 2 oder 3, bedeuten. Die vorgenannten Alkylreste sind vorzugsweise Methyl- oder Ethylreste. Besonders geeignete Verbindungen der Formel (III) sind beispielsweise Methan-diphosphonsäure, Ethan-1,1-diphosphonsäure, Ethan-1,2-diphosphonsäure, n-Propan-1,3-diphosphonsäure, n-Butan-1,4-diphosphonsäure, n-Propan-1,1-diphosphonsäure, n-Propan-2,2-diphosphonsäure, 1-Hydroxyethan-1,1-diphosphonsäure und 1-Hydroxy-n-propan-2,2-diphosphonsäure.

Die Diphosphono-alkane der Formel (III) werden hergestellt durch Umsetzung von Dialkylphosphiten mit Dihalogenalkanen oder, im Falle der Diphosphono-hydroxyalkane, durch Umsetzung von phosphoriger Säure mit den entsprechenden Carbonsäureanhydriden, vorzugsweise Acetanhydrid.

Tertiäre aliphatische Amine mit 2 oder 3 Phosphonomethylgruppen sind Verbindungen der Formel (IV)

(IV) 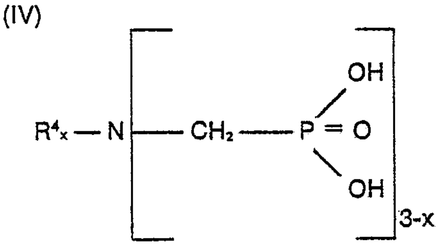

in der $R^4$ einen Alkylrest mit 1 bis 6, vorzugsweise 1, 2 oder 3 Kohlenstoffatomen und x Null oder 1 bedeuten. Der Alkylrest $R^4$ ist insbesondere ein Methyl- oder Ethylrest. Besonders geeignete Verbindungen der Formel (IV) sind beispielsweise Tris(phosphonomethyl)-amin, N-Methyl-N,N-bis(phosphonomethyl)-amin, N-Ethyl-N,N-bis(phosphonomethyl)-amin, N-Propyl-N,N-bis(phosphonomethyl)-amin, N-Butyl-N,N-bis-(phosphonomethyl)-amin und N-Hexyl-N,N-bis-(phosphonomethyl)-amin.

Phosphonomethyl-diamine sind Verbindungen der Formel (V)

(V) 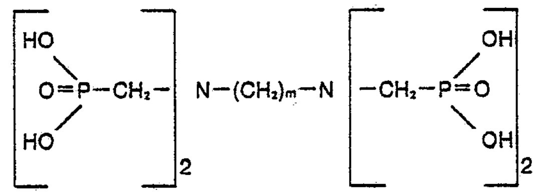

in der m eine ganze Zahl von 2 bis 14, vorzugsweise von 2 bis 6 bedeutet. Besonders geeignete Verbindungen der Formel (V) sind beispielsweise N, N, N', N'-Tetrakis-(phosphonomethyl)-äthylendiamin, N,N,N',N'-Tetrakis-(phosphonomethyl)-trimethylendiamin und die entsprechenden Derivate des Tetramethylendiamins und des Hexamethylendiamins.

Die Phosphonomethyl-amine der Formeln (IV) und (V) werden hergestellt durch Umsetzung von phosphoriger Säure mit Formaldehyd und Ammoniak oder Ammoniumchlorid oder den entsprechenden Aminen oder Diaminen in Anwesenheit von Chlorwasserstoff bei einer Temperatur von 50 bis 120°C, vorzugsweise von 80 bis 100°C.

Die erfindungsgemäss als Dispergierhilfsmittel verwendeten Salze phosphororganischer Verbindungen müssen in Wasser löslich sein. Besonders geeignet sind Alkalisalze, z.B. Natriumsalze und Kaliumsalze, und Ammoniumsalze, d.h. Salze des Ammoniaks und Salze von primären, sekundären oder tertiären aliphatischen Aminen. Als aliphatische Amine eignen sich vorzugsweise Mono-, Di- und Trialkylamine, deren Alkylreste gleich oder verschieden sind und jeweils 1 bis 4 Kohlenstoffatome aufweisen und mit einem Hydroxylrest substituiert sein können. Beispielsweise seien genannt Methylamin, Ethylamin, Propylamin, Dimethylamin, Diethylamin, Dipropylamin, Trimethylamin, Triethylamin, Tripropylamin, Ethanolamin, Diethanolamin, Triethanolamin, N,N-Dimethylaminoethanol und 2-Amino-2-methyl-propanol-(1). Ebenfalls verwendbar sind cyclische Amine, z.B. Piperidin, Morpholin und Piperazin, sowie lineare Polyamine, z.B. Ethylendiamin, Diethylentriamin und Triethylentetramin.

Das Dispergierhilfsmittel wird in einer Menge von 0,005 bis 5, vorzugsweise von 0,01 bis 2 Gewichtsprozent eingesetzt (bezogen auf die Gesamtmenge der Monomeren). Es kann vor Beginn der Polymerisation vorgelegt oder vorzugsweise teilweise vorgelegt und während der Polymerisation zudosiert werden. In einer besonderen Ausführungsform des Verfahrens werden 5 bis 30 Gewichtsprozent des Dispergierhilfsmittels vor Beginn der Polymerisation in wässriger Lösung vorgelegt, 30 bis 55 Gewichtsprozent gleichzeitig mit der Dosierung der Monomeren zugegeben und 15 bis 65 Gewichtsprozent nach Beendigung der Monomerendosierung dem Reaktionsgemisch zudosiert. Die Dispergierhilfsmittel werden einzeln eingesetzt

oder in Kombination miteinander oder zusammen mit üblichen Emulgatoren.

Als Styrol-Copolymere werden Copolymere des Styrols mit Maleinsäureanhydrid oder einem Halbester oder Halbamid der Maleinsäure verwendet; hierbei beträgt das Verhältnis von Styroleinheiten zu Comonomereinheiten 1,5 : 1 bis 6 : 1, vorzugsweise 2 : 1 bis 4 : 1. Das Molekulargewicht (Zahlenmittel) des Styrol-Copolymers liegt im allgemeinen im Bereich von 500 bis 50 000, vorzugsweise von 1 000 bis 20 000, ganz besonders geeignet sind Styrol-Copolymere mit einem Molekulargewicht von 1 200 bis 5 000. Die Styrol/Maleinsäureanhydrid-Copolymere werden in bekannter Weise hergestellt, vorzugsweise durch Polymerisieren der Monomeren in Masse oder Lösung bei einer Temperatur von 75 bis 300°C unter Verwendung eines Peroxids, z.B. Dibenzoylperoxid und Dicumolperoxid, als Initiator. Als Lösungsmittel dient üblicherweise ein aromatischer Kohlenwasserstoff, z.B. Toluol, Cumol und Xylol.

Die Styrol / Maleinsäurederivat - Copolymere werden hergestellt durch Umsetzung eines Styrol/Maleinsäureanhydrid-Copolymers mit einem aliphatischen Alkohol oder einem aliphatischen Amin. Als Alkohol wird insbesondere ein Alkanol mit 3 bis 20, vorzugsweise 4 bis 10 Kohlenstoffatomen verwendet, z.B. n-Butanol, n-Hexanol, n-Octanol und 2-Ethyl-hexanol. Als Amin eignet sich insbesondere ein Alkylamin mit 1 bis 8, vorzugsweise 1 bis 4 Kohlenstoffatomen, z.B. Methylamin, Ethylamin, n-Propylamin und n-Butylamin. Die Umsetzung wird bei erhöhter Temperatur durchgeführt, vorzugsweise bei einer Temperatur von 100 bis 200°C; die Umsetzung erfolgt zu 10 bis 100 Prozent, vorzugsweise zu 20 bis 80 Prozent, d.h. das Copolymer enthält ausser Ester- oder Amidgruppen noch Carboxylgruppen in einer Menge von 50 bis 95 Prozent, vorzugsweise von 60 bis 90 Prozent (bezogen auf die Summe aus Carboxylgruppen und Ester- oder Amidgruppen).

Die erfindungsgemäss verwendeten Salze der Styrol-Copolymeren müssen in Wasser löslich sein. Besonders geeignet sind — entsprechend den Salzen der phosphororganischen Verbindungen — Alkalisalze und Ammoniumsalze. Das Salz des Styrol-Copolymers wird üblicherweise in einer Menge von 0,1 bis 20 Gewichtsprozent, vorzugsweise von 0,5 bis 10 Gewichtsprozent eingesetzt (bezogen auf die Gesamtmenge der Vinylester und der Comonomeren).

Das Salz des Styrol-Copolymers kann der Polyvinylester-Dispersion als solches zugesetzt werden, oder es kann in situ durch Neutralisation des im Reaktionsgemisch vorhandenen Säure-Derivats gebildet werden. Als Neutralisationsmittel dienen basisch reagierende Verbindungen, insbesondere Alkalihydroxide, Alkalicarbonate, Ammoniak und Ammoniumcarbonat sowie die obengenannten primären, sekundären oder tertiären aliphatischen Amine. Die Neutralisation wird in wässrigem Medium bei einer Temperatur von 50 bis 80°C, vorzugsweise 65 bis 75°C durchgeführt; die Menge des Neutralisationsmittels wird so gewählt, dass die jeweilige wässrige Lösung einen pH-Wert von 6 bis 11, vorzugsweise von 7 bis 10 aufweist.

Die erfindungsgemäss verwendeten Vinylester-Polymere sind Vinylester-Homopolymere oder Vinylester-Copolymere. Geeignete Vinylester sind vor allem Vinylester von aliphatischen Monocarbonsäuren mit 1 bis 10 Kohlenstoffatomen, z.B. Vinylacetat, Vinylpropionat, Vinylbutyrat, Vinylcaproat, Vinyllaurat und Vinyldecanate.

Das Vinylester-Copolymer ist entweder ein Copolymer verschiedener Vinylester oder ein Copolymer eines Vinylesters mit einem anderen, in wässriger Dispersion polymerisationsfähigen Comonomer. Das Copolymer ist vorzugsweise binär oder ternär, kann aber auch aus mehr als drei Monomeren zusammengesetzt sein. Die Menge der Comonomeren beträgt insgesamt höchstens 60 Prozent, vorzugsweise höchstens 40 Prozent (bezogen auf die Gesamtmenge aller Monomerer). Als Comonomere sind vor allem olefinisch ungesättigte Verbindungen der Formel (VI) geeignet,

(VI) 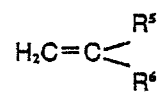

in der $R^5$ ein Wasserstoffatom, einen Alkylrest mit 1 bis 4 Kohlenstoffatomen, einen Alkoxyrest mit 1 bis 4 Kohlenstoffatomen, eine Nitrilgruppe, ein Halogenatom, vorzugsweise ein Chloratom, oder einen Alkoxycarbonylrest mit 2 bis 12, vorzugsweise 2 bis 9 Kohlenstoffatomen bedeutet und $R^6$ ein Wasserstoffatom oder eine Methylgruppe darstellt.

Geeignete Comonomere sind insbesondere Olefine, z.B. Ethylen und Isobutylen, Vinylether, z.B. Vinylmethylether, Vinylethylether und Vinyl-n-butylether, ferner Acrylnitril, Methacrylnitril, Vinylchlorid, Acrylsäureester von einwertigen Alkanolen, z.B. Methylacrylat, Ethylacrylat, Butylacrylat und 2-Ethylhexylacrylat, sowie Methacrylsäureester von einwertigen Alkanolen, z.B. Methylmethacrylat, Ethylmethacrylat, Butylmethacrylat und 2-Ethylhexylmethacrylat. Ebenfalls geeignet sind Maleinsäurediester, insbesondere von einwertigen aliphatischen Alkoholen mit 2 bis 10, vorzugsweise 3 bis 8 Kohlenstoffatomen, z.B. Dibutylmaleinat, Dihexylmaleinat und Dioctylmaleinat.

Die Polymerisation der jeweiligen Monomeren erfolgt unter an sich bekannten Bedingungen in Gegenwart eines radikalbildenden Initiators, vorzugsweise einer Peroxidverbindung oder einer aliphatischen Azoverbindung; geeignete Initiatoren sind beispielsweise die Alkali- oder Ammoniumsalze der Peroxydischwefelsäure od. der Peroxydiphosphorsäure sowie Azo-γ,γ'-bis-(4-cyanvaleriansäure).

Der Initiator wird in einer Menge von 0,05 bis 1, vorzugsweise von 0,1 bis 0,4 Gewichtsprozent, bezogen auf die Gesamtmenge der Monomeren, eingesetzt. Gegebenenfalls wird der Initiator zusammen mit einem Reduktionsmittel verwendet, z.B. mit einem Alkalisulfit, Alkalithiosulfat, Alkalidithionit, Formaldehydnatriumsulfoxylat oder einem Schwermetallsalz. Der Initiator kann vor Beginn der Polymerisation vorgelegt oder dem Polymerisationsgemisch zudosiert werden; das Gleiche gilt für das Reduktionsmittel. Die Polymerisation wird bei einer Temperatur von 25 bis 90°C, vorzugsweise von 40 bis 75°C durchgeführt; die Polymerisationszeit beträgt 2 bis 10, vorzugsweise 3 bis 8 Stunden, je nach Art und Menge der Monomeren.

Die erfindungsgemäss verwendeten Vinylester-Polymere haben eine reduzierte spezifische Viskosität $\eta_{spez}/c$ im Bereich von 2 bis 30 dl/g, vorzugsweise von 3 bis 20 dl/g (gemessen in Dimethylformamid bei einer Temperatur von 25°C).

Die erfindungsgemässe Kunststoffdispersion auf Basis eines Vinylester-Polymers wird hergestellt durch Vermischen einer wässrigen Vinylesterpolymer-Dispersion, die gegebenenfalls ein Dispergierhilfsmittel enthält, mit einer wässrigen Lösung eines Salzes eines bestimmten Styrol-Copolymers. Es ist zweckmässig, dieses Vermischen bei einem pH-Wert im Bereich von 6 bis 11, vorzugsweise von 6 bis 8 durchzuführen.

Besonders vorteilhaft ist die Verwendung der vorgenannten Styrolcopolymer-Salze in Kombination mit hydroxylgruppenhaltigen Polyethern, die unter Normalbedingungen flüssig oder wasserlöslich sind; das Molekulargewicht (Zahlenmittel) dieser Polyether liegt üblicherweise im Bereich von 200 bis 6000, vorzugsweise von 400 bis 3000. Geeignete Polyether sind unter anderem oxethylierte oder propoxylierte Verbindungen, z.B. Reaktionsprodukte von Ethylenoxid oder Propylenoxid mit langkettigen Alkanolen, Aminen, Carbonsäuren oder Phenolen. Besonders geeignet sind Homo- oder Copolymere des Propylenoxids, z.B. Polypropylenoxide und Ethylenoxid/Propylenoxid-Copolymere.

Weitere Zusatzmittel, die der erfindungsgemässen Kunststoffdispersion bei Bedarf zugefügt werden können, sind (a) Entschäumungsmittel, z.B. Tributylphosphat und Polysiloxane, (b) anionische Emulgatoren, z.B. Alkylbenzolsulfone, Alkylsulfate und Sulfate von oxethylierten Verbindungen, (c) Konservierungsmittel, z.B. Phenol, Benzoesäure und Chloracetamid, (d) Weichmacher, z.B. Dibutylphthalat und alkylierte aromatische Kohlenwasserstoffe, (e) Gefrierschutzmittel, z.B. Glykol, Propylenglykol-(1,2) und Glycerin, (f) wasserlösliche Bindemittel, z.B. Stärke. Stärkeether, phosphatierte Stärke, Cellulosederivate wie Carboxymethylcellulose, Casein, Poly(vinylakohol) und Poly(vinylpyrrolidon), (g) optische Aufheller und (h) Lösemittel, die die minimale Filmbildetemperatur der Kunststoffdispersion herabsetzen, z.B. Ethylglykol, Butylglykol, Ethylglykolacetat, Ethyldiglykolacetat, Butylglykolacetat und Butyldiglykolacetat. Das jeweilige Zusatzmittel wird der Dispersion des Vinylesterpolymers zusammen mit der Lösung des Styrolcopolymer-Salzes zugefügt, oder es wird der Kunststoffdispersion zugemischt, die bereits das Styrolcopolymer-Salz enthält. Die Menge der Zusatzmittel beträgt im allgemeinen höchstens 10 Gewichtsprozent, vorzugsweise 1 bis 5 Gewichtsprozent (bezogen auf die Kunststoffdispersion).

Die erfindungsgemäss verwendete Vinylesterpolymer-Dispersion weist einen Feststoffgehalt von 40 bis 65 Gewichtsprozent, vorzugsweise von 45 bis 55 Gewichtsprozent auf. Die minimale Filmbildetemperatur (MFT) der Dispersion liegt im Bereich von −10 bis +30°C, vorzugsweise von 0 bis 20°C, und die Viskosität beträgt 10 bis 1000 mPa·s, vorzugsweise 30 bis 500 mPa·s (gemessen nach Epprecht). Die Dispersion hat einen pH-Wert von 3,5 bis 9,0, vorzugsweise von 4,5 bis 8,0. Der mittlere Durchmesser der dispergierten Polymerpartikel beträgt 0,05 bis 1,0 µm, vorzugsweise 0,08 bis 0,4 µm.

Die Kunststoffdispersion ist in hohem Masse stabil gegenüber Scherkräften, zeigt ein sehr gutes Pigmentbindevermögen und ergibt Anstriche mit starkem Glanz. Sie ist mit anorganischen Pigmenten und Füllstoffen gut verträglich und eignet sich daher mit besonderem Vorteil als Bindemitteldispersion für die vorgenannten Stoffe in Anstrichmitteln aller Art, insbesondere Dispersionsfarben und Papierstreichmassen.

Als Pigmente und Füllstoffe für Papierstreichmassen eignen sich beispielsweise Kaolin, Calciumcarbonat, Titandioxid, Zinksulfat, Bariumsulfat (Schwerspat) und Satinweiss. Diese anorganischen Materialien werden einzeln oder kombiniert eingesetzt, und zwar in einer Gesamtmenge von 100 Gewichtsteilen auf 2 bis 100, vorzugsweise 3 bis 30 Gewichtsteile Vinylester-Polymer. Der Partikeldurchmesser der Pigmente und Füllstoffe liegt üblicherweise im Bereich von 0,1 bis 100 µm, vorzugsweise von 0,2 bis 30 µm. Bei der Herstellung von Papierstreichmassen ist es zweckmässig, zunächst eine wässrige Pigmentsuspension herzustellen, die bereits ein Dispergiermittel enthält, dann eine wässrige Lösung eines der oben erwähnten wasserlöslichen Bindemittel hinzuzufügen und schliesslich die Kunststoffdispersion zuzumischen. Die Pigmentsuspension soll dabei tunlichst einen pH-Wert von 7 bis 11, vorzugsweise von 8 bis 10 aufweisen. Empfehlenwert ist der Zusatz eines wasserlöslichen Bindemittels in einer Menge von 0,5 bis 30 Gewichtsprozent, vorzugsweise 2 bis 15 Gewichtsprozent (bezogen auf Pigmentmenge).

Die Angaben «Teile» und «%» bedeuten hierbei jeweils «Gewichtsteile» und «Gewichtsprozent», wenn nicht anders bezeichnet.

Die in den Beispielen verwendeten Abkürzungen haben die folgenden Bedeutungen:

| | | |
|---|---|---|
| ET | = | Ethylen |
| VA | = | Vinylacetat |
| VC | = | Vinylchlorid |
| RSV | = | reduzierte spezifische Viskosität $\eta_{spez}/c$ [dl/g] |

MA = Maleinsäureanhydrid
DMA = N,N-Dimethylamino-ethanol
HEDP = 1-Hydroxyethan-1,1-diphosphonsäure
MG = Molekulargewicht
MV = Molverhältnis (Styrol : Comonomer)
Cop = Copolymer
Terp = Terpolymer
Bsp = Beispiel
Lsg = Lösung

Beispiel 1

In einem mit Innenthermometer, Rückflusskühler und 2 Tropftrichtern versehenen Rührgefäss werden 460 Teile elektrolytfreies Wasser vorgelegt und mit Stickstoff gespült. Nach Erwärmung des Wassers auf eine Temperatur von 45°C werden eine Lösung von 0,9 Teilen Ammoniumpersulfat in 20 Teilen Wasser und 50% einer Lösung von 15 Teilen n-Decanphosphonsäure in 200 Teilen Wasser, die mit 20prozentiger Kalilauge auf einen pH-Wert von 6,8 eingestellt ist, zugefügt. Nach Erhöhung der Innentemperatur auf 60°C werden 750 Teile Vinylacetat und die restlichen 50% der n-Decanphosphonsäure-Lösung im Laufe von 3 h zudosiert. Danach wird eine Lösung von 0,45 Teilen Ammoniumpersulfat in 30 Teilen Wasser zugesetzt, das Gemisch wird nach Erhöhung der Innentemperatur auf 75°C 1 h lang gerührt und schliesslich unter Rühren auf Raumtemperatur abgekühlt. Man erhält eine niedrigviskose, sehr feinteilige und koagulatfreie Polyvinylacetat-Dispersion mit einem Feststoffgehalt von 50,2%, einer minimalen Filmbildetemperatur von 15°C und einem pH-Wert von 5,7. Das Polymer hat eine reduziert spezifische Viskosität von 5,6 dl/g (gemessen in Dimethylformamid bei 25°C).

400 Teile der vorgenannten Polyvinylacetat-Dispersion werden mit 34,2 Teilen einer 16,3prozentigen wässrigen Lösung des Ammoniumsalzes eines Styrol/Maleinsäureanhydrid-Copolymers verrührt, das ein Molekulargewicht von 1 900 aufweist bei einem Molverhältnis von Styrol-Einheiten zu Maleinsäureanhydrid-Einheiten von 3 : 1. Das resultierende Gemisch wird dann unter Rühren mit 12 Teilen einer 50prozentigen wässrigen Emulsion von Poly(propylenglykol) mit einem Molekulargewicht von 1 750 vermischt und ergibt eine erfindungsgemässe Kunststoffdispersion.

Beispiel 2 (Anwendungsbeispiel)

In einem Rührgefäss werden 1 000 Teile Kaolin, der zu 80% einen Partikeldurchmesser von weniger als 2 µm und zu 0,2% einen Partikeldurchmesser von mehr als 10 µm aufweist, in einer Dispergiermittellösung aus 570 Teilen Wasser, 1 Teil Ätznatron, 1 Teil Natriumpolyacrylat und 2 Teilen Pentanatriumtripolyphosphat unter 10minütigem Rühren bei einer Rührgeschwindigkeit von 5 000 Upm dispergiert. In diese Kaolindispersion wird eine Lösung von 60 Teilen Stärke in 140 Teilen elektrolytfreiem Wasser eingerührt, die bei einer Temperatur von 90°C hergestellt und auf 40°C abgekühlt worden ist. Das erhaltene Gemisch wird dann bei Raumtemperatur mit 200 Teilen der fertigen Kunststoffdispersion gemäss Beispiel 1 vermischt.

Die resultierende Masse enthält Kaolin und Vinylester-Polymer im Verhältnis von 10 : 1. Sie ist glatt streichbar und als Papierstreichmasse geeignet. Die Viskosität der Masse beträgt zunächst 1,60 Pa·s und nach 1 Tag 2,96 Pa·s (gemessen nach Brookfield bei einer Drehzahl von 50 Upm). Analog hergestellte Massen auf der Grundlage einer handelsüblichen Dispersion eines Styrol/Butadien-Copolymers bzw. eines Styrol/Butylacrylat-Copolymers anstatt Poly(vinylacetat), jedoch ohne Zusatz von Styrolcopolymer-Salz und Poly(propylenglykol), zeigen Brookfield-Viskositäten von 1,92 und 2,96 Pa·s bzw. von 1,80 bis 2,52 Pa·s.

Beispiel 3

In dem in Beispiel 1 beschriebenen Rührgefäss werden 500 Teile elektrolytfreies Wasser vorgelegt, mit Stickstoff gespült und auf eine Temperatur von 45°C erwärmt. Dazu werden 11% einer Lösung (I) von 9 Teilen n-Decanphosphonsäure und 3 Teilen 1-Hydroxyethan-1,1-diphosphonsäure in 100 Teilen Wasser, die mit 20prozentiger Natronlauge auf einen pH-Wert von 6,8 eingestellt ist, sowie eine Lösung von 0,9 Teilen Ammoniumpersulfat in 20 Teilen Wasser zugegeben. Nach Erhöhung der Innentemperatur auf 60°C wird ein Gemisch aus 600 Teilen Vinylacetat und 150 Teilen eines handelsüblichen Gemisches von Vinylestern tertiärer, gesättigter, aliphatischer Carbonsäuren mit 10 Kohlenstoffatomen im Laufe von 3 h zudosiert. Im selben Zeitraum werden die restlichen 89% der Lösung (I) zudosiert. Nach anschliessender Zugabe einer Lösung von 0,45 Teilen Ammoniumpersulfat in 30 Teilen Wasser wird die Innentemperatur auf 75°C erhöht. Während des Hochheizens und der ersten 30 min nach Erreichen der Temperatur von 75°C wird eine Lösung (II) von 6 Teilen n-Decanphosphonsäure und 2 Teilen 1-Hydroxyethan-1,1-diphosphonsäure in 60 Teilen Wasser, die mit 20prozentiger Natronlauge auf einen pH-Wert von 6,8 eingestellt ist, zudosiert. Dann wird das Reaktionsgemisch noch 30 min lang bei 75°C weitergerührt und schliesslich unter Rühren auf Raumtemperatur abgekühlt. Man erhält eine niedrigviskose, feinteilige Copolymer-Dispersion mit einem Feststoffgehalt von 52,1% und einem pH-Wert von 5,4. Der mittlere Durchmesser der Copolymer-Partikel beträgt 0,23 µm. Das Copolymer hat eine reduzierte spezifische Viskosität von 6,17 dl/g (gemessen in Dimethylformamid bei 25°C).

Die erhaltene Copolymer-Dispersion wird mit konzentrierter Ammoniaklösung auf einen pH-Wert von 8 eingestellt. 150 Teile dieser Dispersion werden mit 15 Teilen einer 15prozentigen wässrigen Lösung des in Beispiel 1 verwendeten Styrolcopolymer-Salzes verrührt. Das resultierende Gemisch wird dann mit 11,25 Teilen einer

20prozentigen wässrigen Emulsion des in Beispiel 1 eingesetzten Poly(propylenglykols) vermischt.

Beispiel 4 (Anwendungsbeispiel)

Entsprechend Beispiel 2 werden 1 000 Teile Kaolin in einer Dispergiermittellösung aus 540 Teilen Wasser, 1 Teil Ätznatron und 3 Teilen Natriumpolyacrylat dispergiert. Die erhaltene 65-prozentige Kaolindispersion hat einen pH-Wert von 8. 618 Teile dieser Kaolindispersion werden mit 80 Teilen der fertigen Kunststoffdispersion gemäss Beispiel 3 vermischt.

Die resultierende Masse enthält Kaolin und Vinylester-Polymer im Verhältnis von 10 : 1. Sie ist glatt streichbar und als Papierstreichmasse geeignet. Die Broockfield-Viskosität der Masse (gemessen bei einer Drehzahl von 50 Upm) beträgt 0,55 Pa· s. Eine analog hergestellte Masse auf der Grundlage einer handelsüblichen Dispersion eines Styrol-Butadien-Copolymers, jedoch ohne Zusatz von Styrolcopolymer-Salz und Poly(propylenglykol), zeigt eine Brookfield-Viskosität von 1,32 Pa· s.

Beispiel 5

In einem Rührautoklav werden 10 000 Teile elektrolytfreies Wasser mit Unterdruck eingezogen, und das Wasser wird unter Rühren mit Stickstoff gespült. Dann werden 20 bar Ethylen in den Autoklav gedrückt, und die Innentemperatur wird auf 45°C eingestellt. Nun werden 25% einer Lösung (I) von 19 Teilen Natriumsulfit und 175 Teilen n-Decanphosphonsäure in 2 000 Teilen Wasser, die mit 50prozentiger Natronlauge auf einen pH-Wert von 6,8 eingestellt ist, gleichzeitig mit 1 270 Teilen Vinylacetat im Laufe von 10 min zudosiert. Anschliessend wird eine Lösung von 45 Teilen Ammoniumpersulfat in 400 Teilen Wasser zudosiert und die Innentemperatur auf 60°C eingestellt. Im Laufe von 6 h werden die restlichen 75% der Lösung (I) und weitere 11 430 Teile Vinylacetat zudosiert, der Ethylendruck wird hierbei durch Nachdrücken von Ethylen auf 20 bar und die Innentemperatur durch Aussenkühlung auf 60°C gehalten. Dann wird die Ethylenzufuhr beendet; eine Lösung von 15 Teilen Ammoniumpersulfat in 600 Teilen Wasser wird zudosiert, und der Autoklavinhalt wird auf 85°C geheizt. Während des Hochheizens und während der ersten 30 min bei 85°C wird eine Lösung (II) von 130 Teilen n-Decanphosphonsäure in 1 170 Teilen Wasser, die mit 50prozentiger Natronlauge auf einen pH-Wert von 6,8 eingestellt ist, zudosiert, und dann wird das Reaktionsgemisch noch 30 min lang bei 85°C weitergerührt und schliesslich unter Rühren auf Raumtemperatur abgekühlt. Man erhält eine feinteilige, niedrigviskose und scherstabile Copolymer-Dispersion mit einem Feststoffgehalt von 51,5% und einem pH-Wert von 4,8. Das Copolymer enthält 14,2% Ethylen und hat eine reduzierte spezifische Viskosität von 2,98 dl/g (gemessen in Dimethylformamid bei 25°C).

Die erhaltene Copolymer-Dispersion wird mit konzentrierter Ammoniaklösung auf einen pH-Wert von 8 eingestellt. 2 500 Teile dieser Dispersion werden mit 215 Teilen der Styrolcopolymersalz-Lösung gemäss Beispeil 1 und 75 Teilen der Poly(propylenglykol)-Emulsion gemäss Beispiel 1 vermischt.

Beispiel 6

Es wird wie in Beispiel 5 beschrieben verfahren, jedoch beträgt der Ethylendruck 45 bar und die Polymerisationstemperatur 53°C. Man erhält eine niedrigviskose, feinteilige und scherstabile Copolymer-Dispersion mit einem Feststoffgehalt von 52,7% und einem pH-Wert von 4,5. Der mittlere Durchmesser der Copolymer-Partikel beträgt 0,20 µm. Das Copolymer enthält 18,7% Ethylen und hat eine reduzierte spezifische Viskosität von 10,2 dl/g (gemessen in Dimethylformamid bei 25°C).

Die erhaltene Copolymer-Dispersion wird entsprechend Beispiel 5 auf einen pH-Wert von 8 eingestellt und mit Styrolcopolymersalz-Lösung und Poly(propylenglykol)-Emulsion vermischt.

Beispiele 7 bis 10 (Anwendungsbeispiele)

Entsprechend Beispiel 2 werden die nach den Beispielen 5 und 6 erhaltenen Kunststoffdispersionen jeweils mit den in den Beispielen 2 und 4 verwendeten Kaolindispersionen vermischt. Die jeweils resultierenden Massen enthalten Kaolin und Vinylester-Polymer im Verhältnis von 10 : 1; sie sind glatt streichbar und als Papierstreichmasse geeignet. Die Brookfield-Viskosität der Massen (gemessen bei einer Drehzahl von 50 Upm) ist aus der nachstehenden Tabelle 1 ersichtlich.

Tabelle 1

| Beispiel | 7 | 8 | 9 | 10 |
|---|---|---|---|---|
| Vinylester-Polymer | ET/VA-Cop | ET/VA-Cop | ET/VA-Cop | ET/VA-Cop |
| ET-Gehält (%) | 14,2 | 14,2 | 18,7 | 18,7 |
| RSV (dl/g) | 2,98 | 2,98 | 10,2 | 10,2 |
| Styrol-Copol.-Salz | aus Beispiel 1 | aus Beispiel 1 | aus Beispiel 1 | aus Beispiel 1 |
| Kaolin-Dispersion | aus Beispiel 2 | aus Beispiel 4 | aus Beispiel 2 | aus Beispiel 4 |
| Brookfield-Viskosität (Pa· s) | 0,52 | 2,84 | 0,74 | 4,44 |

Beispiel 11

Es wird wie in Beispiel 5 beschrieben verfahren, jedoch beträgt der Ethylendruck 45 bar und die Polymerisationstemperatur 53°C; ferner wird statt Decanphosphonsäure nun Decanphosphonsäuremonomethylester verwendet. Man erhält eine niedrigviskose und feinteilige Copolymer-Dispersion mit einem Feststoffgehalt von 54,4% und einem pH-Wert von 4, 5. Das Copolymer enthält 22% Ethylen und hat eine reduzierte spezifische Viskosität von 18,0 dl/g (gemessen in Dimethylformamid bei 25°C).

Die erhaltene Copolymer-Dispersion wird entsprechend Beispiel 1 mit Styrolcopolymersalz-Lösung und Poly(propylenglykol)-Emulsion vermischt.

Beispiel 12

Es wird wie in Beispiel 5 beschrieben verfahren, jedoch beträgt der Ethylendruck 45 bar und die Polymerisationstemperatur 53°C; ferner wird statt der insgesamt 12700 Teile Vinylacetat nun ein Gemisch aus 8890 Teilen Vinylacetat und 3810 Teilen Vinylchlorid und statt Decanphosphonsäure Decanphosphonsäuremonomethylester verwendet. Man erhält eine niedrigviskose und sehr feinteilige Terpolymer-Dispersion mit einem Feststoffgehalt von 50,5% und einem pH-Wert von 4,6. Der mittlere Durchmesser der Terpolymer-Partikel beträgt 0,16 µm. Das Terpolymer hat eine reduzierte spezifische Viskosität von 2,55 dl/g (gemessen in Dimethylformamid bei 25°C).

Die erhaltene Terpolymer-Dispersion wird entsprechend Beispiel 1 mit Styrolcopolymersalz-Lösung und Poly(propylenglykol)-Emulsion vermischt.

Beispiel 13 und 14 (Anwendungsbeispiele)

Entsprechend Beispiel 2 werden die nach den Beispielen 11 und 12 erhaltenen Kunststoffdispersionen jeweils mit der in Beispiel 2 verwendeten, stärkehaltigen Kaolindispersion vermischt. Die jeweils resultierenden Massen enthalten Kaolin und Vinylester-Polymer im Verhältnis von 10 : 1; sie sind glatt streichbar und als Papierstreichmasse geeignet. Die Brookfield-Viskosität der Massen (gemessen bei einer Drehzahl von 50 Upm) ist aus der nachstehenden Tabelle 2 ersichtlich.

Tabelle 2

| Beispiel | 13 | 14 |
|---|---|---|
| Vinylester-Polymer | ET/VA-Cop | ET/VA/VC-Terp |
| RSV (dl/g) | 2,55 | 18,0 |
| Styrol-Cop-Salz | aus Beispiel 1 | aus Beispiel 1 |
| Kaolin-Dispersion | aus Beispiel 2 | aus Beispiel 2 |
| Brookfield-Viskosität (Pa· s) | | |
| sofort | 0,82 | 0,86 |
| nach 1 Tag | 0,60 | 0,62 |

Beispiel 15

In einem Rührautoklav werden 10000 Teile elektrolytfreies Wasser mit Unterdruck eingezogen, und das Wasser wird unter Rühren mit Stickstoff gespült. Dann werden 20 bar Ethylen in den Autoklav gedrückt, und die Innentemperatur wird auf 45°C eingestellt. Nun werden 25% einer Lösung (I) von 19 Teilen Natriumsulfit, 180 Teilen Natriumlaurylsulfat und 60 Teilen Tris(phosphonomethyl)-amin in 2000 Teilen Wasser, die mit konzentrierter Ammoniaklösung auf einen pH-Wert von 6,8 eingestellt ist, im Laufe von 10 min zudosiert. Anschliessend werden 10% eines Gemisches aus 8890 Teilen Vinylacetat und 3810 Teilen Vinylchlorid zugefügt, und der Ethylendruck wird auf 45 bar erhöht. Danach wird eine Lösung von 45 Teilen Ammoniumpersulfat in 400 Teilen Wasser zudosiert und die Innentemperatur auf 60°C eingestellt. Im Laufe von 6 h werden die restlichen 75% der Lösung (I) und die restlichen 90% des Vinylacetat/Vinylchlorid-Gemisches zudosiert; der Ethylendruck wird hierbei durch Nachdrücken von Ethylen auf 45 bar gehalten. Dann wird die Ethylenzufuhr beendet; eine Lösung von 15 Teilen Ammoniumpersulfat in 600 Teilen Wasser wird zudosiert; und der Autoklavinhalt wird auf 85°C geheizt. Während des Hochheizens und während der ersten 30 min bei 85°C wird eine Lösung (II) von 120 Teilen Natriumlaurylsulfat und 40 Teilen Tris(phosphonomethyl)-amin in 1170 Teilen Wasser, die mit konzentrierter Ammoniaklösung auf einen pH-Wert von 6,8 eingestellt ist, zudosiert. Schliesslich wird das Reaktionsgemisch noch 30 min lang bei 85°C nachgerührt und dann unter Rühren auf 30°C abgekühlt. Man erhält eine feinteilige, niedrigviskose und scherstabile ET/VA/VC-Terpolymer-Dispersion mit einem Feststoffgehalt von 51,1%, einer minimalen Filmbildetemperatur von 7°C, einer Viskosität von 40 mPa·s und einem pH-Wert von 5,0. Der mittlere Durchmesser der Polymerpartikel beträgt 0,169 µm. Das Terpolymer hat einen Ethylengehalt von 12,3% und eine reduzierte spezifische Viskosität von 3,42 dl/g (gemessen in Dimethylformamid bei 25°C).

Die erhaltene Terpolymer-Dispersion wird mit konzentrierter Ammoniaklösung auf einen pH-Wert von 8 eingestellt. 2500 Teile dieser Dispersion werden mit 215 Teilen der Styrolcopolymersalz-Lösung gemäss Beispiel 1 und 75 Teilen der Poly(propylenglykol)-Emulsion gemäss Beispeil 1 gemischt.

Beispiel 16 (Anwendungsbeispiel)

Entsprechend Beispiel 2 wird die nach Beispiel 15 erhaltene Kunststoffdispersion mit der in Beispiel 2 verwendeten, stärkehaltigen Kaolindispersion vermischt. Die resultierende Masse ist glatt streichbar und als Papierstreichmasse geeignet. Die Brookfield-Viskosität der Masse beträgt 2,0 Pa·s (gemessen bei einer Drehzahl von 50 Upm).

Zum Vergleich wird eine entsprechende Masse hergestellt, jedoch ohne Zusatz von Styrolcopolymer-Salz und Poly(propylenglykol). Diese Masse hat eine Brookfield-Viskosität von 80 Pa·s (gemessen bei einer Drehzahl von 50 Upm) und ist nicht verarbeitbar.

Beispiele 17 bis 21

Es wird wie in Beispiel 5 beschrieben verfahren, jedoch beträgt die Polymerisationstemperatur 50°C und der Ethylendruck 45 bar; ferner wird statt Decanphosphonsäure nun ein handelsübliches Gemisch von Estern aus Phosphorsäure und oxethyliertem Laurinalkohol verwendet, das Säurezahlen von 110 mg KOH/g (bei pH 5 bis 5,5) und 184 mg KOH/g (bei pH 9 bis 9,5) aufweist. Man erhält eine niedrigviskose, feinteilige und scherstabile Copolymer-Dispersion mit einem Feststoffgehalt von 54,5% und einem pH-Wert von 5,4. Der mittlere Durchmesser der Copolymer-Partikel beträgt 0,20 µm, und das Copolymer hat eine reduzierte spezifische Viskosität von 7,9 dl/g (gemessen in Dimethylformamid bei 25°C).

Jeweils 4000 Teile der erhaltenen Copolymer-Dispersion werden mit unterschiedlichen Mengen verschiedener wässriger Styrolcopolymersalz-Lösungen sowie jeweils 60 Teilen der Poly(propylenglykol)-Emulsion gemäss Beispiel 1 vermischt. Die Einzelheiten sind aus der nachstehenden Tabelle 3 ersichtlich.

Tabelle 3

| Beispiel | 17 | 18 | 19 | 20 | 21 |
|---|---|---|---|---|---|
| Styrol/MA-Cop-Salz | $NH_4$-Salz | $NH_4$-Salz | DMA-Salz | $NH_4$-Salz | $NH_4$-Salz |
| MG | 1700 | 1900 | 1900 | 1900 | 1900 |
| MV | 2 : 1 | 3 : 1 | 3 : 1 | 2 : 1 | 3 : 1 |
| Lösungsmenge (Teile) | 560 | 690 | 580 | 600 | 520 |
| Salzgehalt (%) | 20,1 | 16,3 | 19,4 | 18,8 | 16,3 |
| pH-Wert | 8,1 | 9,3 | 9,5 | 8,7 | 9,3 |
| Wasserzusatz (Teile) | 85 | — | 65 | 45 | — |
| Feststoffgehalt des Gemischs (%) | 49,9 | 49,5 | 47,7 | 50,1 | 49,9 |
| pH-Wert des Gemischs | 7,8 | 8,3 | 9,1 | 8,0 | 9,2 |

Beispiele 22 bis 26 (Anwendungsbeispiele)

Entsprechend Beispiel 2 werden die nach den Beispielen 17 bis 21 erhaltenen Kunststoffdispersionen jeweils mit den in den Beispielen 2 und 4 verwendeten Kaolindispersionen vermischt. Die jeweils resultierenden Massen enthalten Kaolin und Vinylester-Polymer im Verhältnis von 10 : 1; sie sind sämtlich niedrigviskos, glatt streichbar und als Papierstreichmasse geeignet. Die Streichbarkeit ist auch nach 16stündigem Stehenlassen sowie nach 16stündigem Rühren unverändert. Die jeweilige Brookfield-Viskosität der Massen (gemessen bei einer Drehzahl von 50 Upm) ist aus der nachstehenden Tabelle 4 ersichtlich.

Tabelle 4

| Beispiel | Kunststoff-Dispersion | Kaolin-Dispersion | Brookfield-Viskosität (Pa· s) sofort | nach 16 h | nach 16 h Rühren |
|---|---|---|---|---|---|
| 22 | aus Beispiel 17 | aus Beispiel 2 | 1,92 | 2,60 | 1,96 |
| | aus Beispiel 17 | aus Beispiel 4 | 0,64 | | |
| 23 | aus Beispiel 18 | aus Beispiel 2 | 1,80 | 2,68 | 1,88 |
| | aus Beispiel 18 | aus Beispiel 4 | 0,50 | | |
| 24 | aus Beispiel 19 | aus Beispiel 2 | 1,44 | 1,88 | 0,96 |
| | aus Beispiel 19 | aus Beispiel 4 | 0,50 | | |
| 25 | aus Beispiel 20 | aus Beispiel 2 | 1,84 | 2,48 | 1,10 |
| | aus Beispiel 20 | aus Beispiel 4 | 0,60 | | |
| 26 | aus Beispiel 21 | aus Beispiel 2 | 1,52 | 1,88 | 1,10 |
| | aus Beispiel 21 | aus Beispiel 4 | 0,70 | | |

Vergleichsbeispiele 1 bis 6

Jeweils 4000 Teile der nach Beispiel 17 erhaltenen Copolymer-Dispersion werden ohne Dispergiermittel oder mit Lösungen verschiedener bekannter Dispergiermittelsalze sowie jeweils 60 Teilen der Poly(propylenglykol)-Emulsion gemäss Beispiel 1 vermischt. Die Einzelheiten sind aus der nachstehenden Tabelle 5 ersichtlich.

Tabelle 5

| Vergleichsbeispiel | Dispergiermittelsalz | Lsg.-Menge (Teil) | Salzgehalt (%) | pH-Wert 1) | Wasserzusatz (Teil) | Fest.-gehalt (%) | pH-Wert 2) |
|---|---|---|---|---|---|---|---|
| 1 | — | — | — | — | 420 | 50,1 | 6,8 |
| 2 | Styrol/MA-Cop., $NH_4$-Salz, MG 1 600 MV 1 : 1 | 530 | 21,3 | 8,9 | 115 | 49,7 | 8,4 |
| 3 | Ammonium-citrat | 564 | 20,0 | 8,9 | 80 | 49,2 | 7,8 |
| 4 | Ammonium-polyacrylat | 564 | 20,0 | 10,3 | 80 | 49,8 | 9,3 |
| 5 | Natrium-poly-vinylsulfonat | 564 | 20,0 | 9,8 | 80 | 49,6 | 6,9 |
| 6 | Pentanatrium-tripolyphosphat | 564 | 20,0 | 8,0 | 80 | 50,2 | 7,9 |

1) pH-Wert der Dispergiermittelsalz-Lösung
2) pH-Wert des Gemisches

Vergleichsbeispiele 7 bis 12

Entsprechend Beispiel 2 werden die nach den Vergleichsbeispielen 1 bis 6 erhaltenen Kunststoffdispersionen jeweils mit den in den Beispielen 2 und 4 verwendeten Kaolindispersionen vermischt. Die jeweils resultierenden Massen enthalten Kaolin und Vinylester-Polymer im Verhältnis von 10 : 1. Sie sind niedrig- bis hochviskos und zeigen beim Streichen eine starke Viskositätserhöhung, vor allem nach 16stündiger Lagerung; nach 16stündigem Rühren sind sie deutlich bis stark inhomogen. Die jeweilige Brookfield-Viskosität der Massen (gemessen bei einer Drehzahl von 50 Upm) ist aus der nachstehenden Tabelle 6 ersichtlich.

Tabelle 6

| Vergleichsbeispiel | Kunststoff-Dispersion | Kaolin-Dispersion | Brookfield-Viskosität (Pa· s) sofort | nach 16 h | nach 16 h Rühren |
|---|---|---|---|---|---|
| 7 | aus Vergleichsbeispiel 1 | aus Beispiel 2 | 1,68 | 2,68 | 9,6 |
| | aus Vergleichsbeispiel 1 | aus Beispiel 4 | n. m. hoch 1) | | |
| 8 | aus Vergleichsbeispiel 2 | aus Beispiel 2 | nicht messbar hoch | | |
| | aus Vergleichsbeispiel 2 | aus Beispiel 4 | n. m. hoch 1) | | |
| 9 | aus Vergleichsbeispiel 3 | aus Beispiel 2 | nicht messbar hoch | | |
| | aus Vergleichsbeispiel 3 | aus Beispiel 4 | n. m. hoch 1) | | |
| 10 | aus Vergleichsbeispiel 4 | aus Beispiel 2 | 2,0 | 2,8 | 11,0 |
| | aus Vergleichsbeispiel 4 | aus Beispiel 4 | 1,36 | | |

Tabelle 6 (Fortsetzung)

| Vergleichs-beispiel | Kunststoff-Dispersion | Kaolin-Dispersion | Brookfield-Viskosität (Pa· s) sofort | nach 16 h | nach 16 h Rühren |
|---|---|---|---|---|---|
| 11 | aus Vergleichs-beispiel 5 | aus Beispiel 2 | 3,6 | 12,6 | 9,4 |
| | aus Vergleichs-beispiel 5 | aus Beispiel 4 | n. m. hoch ¹) | | |
| 12 | aus Vergleichs-beispiel 6 | aus Beispiel 2 | 2,16 | 44,8 | 9,0 |
| | aus Vergleichs-beispiel 6 | aus Beispiel 4 | 0,7 | | |

¹) nicht messbar hoch

Beispiel 27

Es wird wie in Beispiel 1 beschrieben verfahren, jedoch wird statt n-Decanphosphonsäure nun n-Decanphosphonsäuremonomethylester eingesetzt, dessen wässrige Lösung auf einen pH-Wert von 6,0 eingestellt ist. Man erhält eine niedrigviskose und feinteilige Polyvinylacetat-Dispersion mit einem Feststoffgehalt von 51,3%, einer minimalen Filmbildetemperatur von 20°C und einem pH-Wert von 5,0. Der mittlere Durchmesser der Polymer-Partikel beträgt 0,21 µm. Das Polymer hat eine reduzierte spezifische Viskosität von 5,44 dl/g (gemessen in Dimethylformamid bei 25°C).

Die erhaltene Polyvinylacetat-Dispersion wird entsprechend Beispiel 1 mit Styrolcopolymersalz-Lösung und Poly(propylenglykol)-Emulsion vermischt.

Beispiel 28 (Anwendungsbeispiel)

Entsprechend Beispiel 2 wird die nach Beispiel 27 erhaltene Polyvinylacetat-Dispersion mit der in Beispiel 2 verwendeten stärkehaltigen Kaolindispersion vermischt. Die resultierende Masse enthält Kaolin und Vinylester-Polymer im Verhältnis von 10 : 1 und hat einen Feststoffgehalt von 59%. Sie ist glatt streichbar und als Papierstreichmasse geeignet. Die Brookfield-Viskosität der Masse (gemessen bei einer Drehzahl von 50 Upm) beträgt zunächst 1,44 Pa· s und nach 1 Tag 1,56 Pa· s.

Eine analog hergestellte Masse auf der Grundlage einer handelsüblichen Dispersion eines Styrol/Butylacrylat-Copolymers, jedoch ohne Zusatz von Styrolcopolymersalz und Poly(propylenglykol), zeigt eine Brookfield-Viskosität von 1,80 Pa· s bzw. 1,10 Pa· s.

**Patentansprüche für die Vertragsstaaten:**
BE, CH, DE, FR, GB, IT, LU, NL, SE

1. Wässrige Kunststoffdispersion auf Basis eines Vinylester-Polymers, dadurch gekennzeichnet, dass sie 0,1 bis 20 Gewichtsprozent (bezogen auf Vinylester-Polymer) eines wasserlöslichen Ammoniumsalzes oder Alkalisalzes eines Copolymers aus Styrol und Maleinsäureanhydrid oder einem Halbester der Maleinsäure mit einem Alkanol mit 3 bis 20 Kohlenstoffatomen oder einem Halbamid der Maleinsäure mit einem Alkylamin mit 1 bis 8 Kohlenstoffatomen, wobei das genannte Copolymer Styroleinheiten und Comonomereinheiten im Verhältnis von 1,5 : 1 bis 6 : 1 und ein Molekulargewicht (Zahlenmittel) von 500 bis 50 000 aufweist, sowie einen hydroxylgruppenhaltigen Polyether enthält, der unter Normalbedingungen flüssig oder wasserlöslich ist und ein Molekulargewicht (Zahlenmittel) von 200 bis 6 000 aufweist und das Vinylester-Polymer eine reduzierte spezifische Viskosität $\eta_{spez}/c$ von 2 bis 30 dl/g aufweist (gemessen in Dimethylformamid bei einer Temperatur von 25°C).

2. Kunststoffdispersion nach Anspruch 1, dadurch gekennzeichnet, dass der Polyether ein Homopolymer des Propylenoxids ist.

3. Kunststoffdispersion nach Anspruch 1, dadurch gekennzeichnet, dass das Vinylester-Polymer in Form von Partikeln mit einem mittleren Durchmesser von 0,05 bis 1,0 µm vorliegt.

4. Kunststoffdispersion nach Anspruch 1, dadurch gekennzeichnet, dass das Vinylester-Polymer ein Copolymer verschiedener Vinylester von aliphatischen Monocarbonsäuren mit 1 bis 10 Kohlenstoffatomen oder ein Copolymer aus einem solchen Vinylester und einem Comonomer der Formel

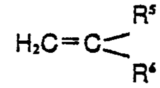

ist, in der $R^5$ ein Wasserstoffatom, einen Alkylrest mit 1 bis 4 Kohlenstoffatomen, einen Alkoxyrest mit 1 bis 4 Kohlenstoffatomen, eine Nitrilgruppe, ein Halogenatom oder einen Alkoxycarbonylrest mit 2 bis 12 Kohlenstoffatomen bedeutet und $R^6$ ein Wasserstoffatom oder eine Methylgruppe darstellt.

5. Kunststoffdispersion nach Anspruch 1, dadurch gekennzeichnet, dass sie zusätzlich ein Dispergierhilfsmittel enthält, das ein Salz der Poly(acrylsäure), Poly(methacrylsäure), Poly(vinylsulfonsäure) oder Polyphosphorsäure oder eine phosphororganische Verbindung mit 1, 2, 3 oder 4 Phosphonogruppen ist.

6. Verfahren zur Herstellung einer wässrigen Kunststoffdispersion auf Basis eines Vinylester-Polymers, dadurch gekennzeichnet, dass ein Vinylester — gegebenenfalls in Kombination mit einem copolymerisationsfähigen weiteren Monomer — unter an sich bekannten Bedingungen in wässriger Dispersion polymerisiert wird und die erhaltene Polymerdispersion mit einer wässrigen Lösung eines Ammoniumsalzes oder Alkalisalzes eines Copolymers aus Styrol und Maleinsäureanhydrid oder einem Halbester der Maleinsäure mit einem Alkanol mit 3 bis 20 Kohlenstoffatomen oder einem Halbamid der Maleinsäure mit einem Alkylamin mit 1 bis 8 Kohlenstoffatomen, wobei das genannte Copolymer Styroleinheiten und Comonomereinheiten im Verhältnis von 1,5 : 1 bis 6 : 1 und ein Molekulargewicht (Zahlenmittel) von 500 bis 50 000 aufweist, sowie mit einem hydroxylgruppenhaltigen Polyether, der unter Normalbedingungen flüssig oder wasserlöslich ist und ein Molekulargewicht (Zahlenmittel) von 200 bis 6 000 aufweist, unter Einhaltung eines pH-Wertes der Polymerdispersion von 6 bis 11 vermischt wird.

7. Anstrichmittel, enthaltend die Kunststoffdispersion gemäss Anspruch 1.

**Patentansprüche für den Vertragsstaat:** AT

1. Verfahren zur Herstellung einer wässrigen Kunststoffdispersion auf Basis eines Vinylester-Polymers, dadurch gekennzeichnet, dass ein Vinylester — gegebenenfalls in Kombination mit einem copolymerisationsfähigen weiteren Monomer — unter an sich bekannten Bedingungen in wässriger Dispersion polymerisiert wird und die erhaltene Polymerdispersion mit einer wässrigen Lösung eines Ammoniumsalzes oder Alkalisalzes eines Copolymers aus Styrol und Maleinsäureanhydrid oder einem Halbester der Maleinsäure mit einem Alkanol mit 3 bis 20 Kohlenstoffatomen oder einem Halbamid der Maleinsäure mit einem Alkylamin mit 1 bis 8 Kohlenstoffatomen, wobei das genannte Copolymer Styroleinheiten und Comonomereinheiten im Verhältnis von 1,5 : 1 bis 6 : 1 und ein Molekulargewicht (Zahlenmittel) von 500 bis 50 000 aufweist, sowie mit einem hydroxylgruppenhaltigen Polyether, der unter Normalbedingungen flüssig oder wasserlöslich ist und ein Molekulargewicht (Zahlenmittel) von 200 bis 6 000 aufweist, unter Einhaltung eines pH-Wertes der Polymerdispersion von 6 bis 11 vermischt wird.

2. Verfahren nach Anspruch 1, dadurch gekennzeichnet, dass das Styrol-Copolymer-Salz in einer Menge von 0,1 bis 20 Gewichtsprozent (bezogen auf Vinylester-Polymer) verwendet wird.

3. Verfahren nach Anspruch 1, dadurch gekennzeichnet, dass als Polyether ein Homopolymer des Propylenoxids verwendet wird.

4. Verfahren nach Anspruch 1, dadurch gekennzeichnet ,dass als copolymerisationsfähiges weiteres Monomer eine olefinisch ungesättigte Verbindung der Formel

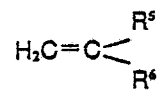

verwendet wird, in der $R^5$ ein Wasserstoffatom, einen Alkylrest mit 1 bis 4 Kohlenstoffatomen, einen Alkoxyrest mit 1 bis 4 Kohlenstoffatomen, eine Nitrilgruppe, ein Halogenatom oder einen Alkoxycarbonylrest mit 2 bis 12 Kohlenstoffatomen bedeutet und $R^6$ ein Wasserstoffatom oder eine Methylgruppe darstellt.

5. Verfahren nach Anspruch 1, dadurch gekennzeichnet, dass die Polymerisation in Gegenwart eines Dispergierhilfsmittels durchgeführt wird, das ein Salz der Poly(acrylsäure), Poly(methacrylsäure), Poly(vinylsulfonsäure) oder Polyphosphorsäure oder eine phosphororganische Verbindung mit 1, 2, 3 oder 4 Phosphonogruppen ist.

**Claims for the Contracting States:**
BE, CH, DE, FR, GB, IT, LU, NL, SE

1. Aqueous plastics dispersion on the basis of a vinyl ester polymer, characterised in that it contains 0.1 to 20 weight per cent (relative to the vinyl ester polymer) of a water-soluble ammonium salt or alkali metal salt of a copolymer of styrene and maleic acid anhydride or a semiester of maleic acid with an alkanol having 3 to 20 carbon atoms or a semiamide of maleic acid with an alkylamine havin 1 to 8 carbon atoms, the said copolymer having styrene units and comonomer units in the ratio of from 1.5 : 1 to 6 : 1 and a molecular weight (numerical average) of from 500 to 50,000, and a hydroxy groups containing polyether which under normal conditions is liquid or water-soluble and has a molecular weight (numerical average) of from 200 to 6,000, the said vinyl ester polymer having a reduced specific viscosity $\eta_{spez}/c$ of from 2 to 30 dl/g (measured in dimethyl formamide at a temperature of 25°C).

2. Plastics dispersion according to claim 1, characterised in that the polyether is a homopolymer of propylene oxide.

3. Plastics dispersion according to claim 1, characterised in that the vinyl ester polymer is present in the form of particles having an average diameter of from 0.05 to 1.0 µm.

4. Plastics dispersion according to claim 1, characterised in that the vinyl ester polymer is a copolymer of different vinyl esters of aliphatic monocarboxylic acids having 1 to 10 carbon atoms, or a copolymer of such vinyl ester and a comonomer of the formula

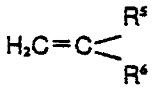

wherein $R^5$ is a hydrogen atom, an alkyl radical having 1 to 4 carbon atoms, an alkoxy radical having 1 to 4 carbon atoms, a nitrilo group, a halogen atom, or an alkoxycarbonyl radical having 2 to 12 carbon atoms, and $R^6$ is a hydrogen atom or a methyl group.

5. Plastics dispersion according to claim 1, characterised in that it contains additionally a dispersing auxiliary which is a salt of poly(acrylic acid), poly(methacrylic acid), poly(vinyl sulfonic acid) or polyphosphoric acid, or an organic phosphorus compound having 1, 2, 3 or 4 phosphono groups.

6. Process for the preparation of an aqueous plastics dispersion on the basis of a vinyl ester polymer, characterised in that a vinyl ester — optionally in combination with a copolymerisable further monomer — is polymerised in aqueous dispersion under conditions known per se, and the polymer dispersion obtained is mixed with an aqueous solution of an ammonium salt or an alkali metal salt of a copolymer of styrene and maleic acid anhydride or a semiester of maleic acid with an alkanol having 3 to 20 carbon atoms or a semiamide of maleic acid with an alkylamine having 1 to 8 carbon atoms, the said copolymer having styrene units and comonomer units in the ratio of from 1.5 : 1 to 6 : 1 and a molecular weight (numerical average) of from 500 to 50,000, and with a hydroxy groups containing polyether which under normal conditions is liquid or water-soluble and has a molecular weight (numerical average) of from 200 to 6,000, while maintaining a pH value of the polymer dispersion of from 6 to 11.

7. Coating material containing the plastics dispersion according to claim 1.

**Claims for the Contracting State:** AT

1. Process for the preparation of an aqueous plastics dispersion on the basis of a vinyl ester polymer, characterised in that a vinyl ester — optionally in combination with a copolymerisable further monomer — is polymerised in aqueous dispersion under conditions known per se, and the polymer dispersion obtained is mixed with an aqueous solution of an ammonium salt or an alkali metal salt of a copolymer of styrene and maleic acid anhydride or a semiester of maleic acid with an alkanol having 3 to 20 carbon atoms or a semiamide of maleic acid with an alkylamine having 1 to 8 carbon atoms, the said copolymer having styrene units and comonomer units in the ratio of from 1.5 : 1 to 6 : 1 and a molecular weight (numerical average) of from 500 to 50,000, and with a hydroxy groups containing polyether which under normal conditions is liquid or water-soluble and has a molecular weight (numerical average) of from 200 to 6,000, while maintaining a pH value of the polymer dispersion of from 6 to 11.

2. Process according to claim 1, characterised in that the styrene copolymer salt is used in an amount of from 0.1 to 20 weight per cent (relative to the vinyl ester polymer).

3. Process according to claim 1, characterised in that a homopolymer of propylene oxide is used as polyether.

4. Process according to claim 1, characterised in that an olefinically unsaturated compound of the formula

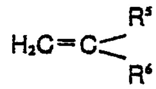

wherein $R^5$ is a hydrogen atom, an alkyl radical having 1 to 4 carbon atoms, an alkoxy radical having 1 to 4 carbon atoms, a nitrilo group, a halogen atom, or an alkoxycarbonyl radical having 2 to 12 carbon atoms, and $R^6$ is a hydrogen atom or a methyl group, is used as copolymerisable further monomer.

5. Process according to claim 1, characterised in that the polymerisation is carried out in the presence of a dispersing auxiliary which is a salt of poly(acrylic acid), poly(methacrylic acid), poly(vinyl sulfonic acid) or polyphosphoric acid, or an organic phosphorus compound having 1, 2, 3 or 4 phosphono groups.

**Revendications pour les Etats contractants:** BE, CH, DE, FR, GB, IT, LU, NL, SE

1. Dispersion aqueuse de matière plastique à base d'un polymère d'ester vinylique, dispersion caractérisée en ce qu'elle contient de 0,1 à 20% en poids (par rapport au polymère d'ester vinylique) d'un sel hydrosoluble d'ammonium ou de métal alcalin d'un copolymère du styrène et de l'anhydride maléique ou d'un hémi-ester de l'acide maléique dérivant d'un alcanol contenant de 3 à 20 atomes de carbone ou d'un hémiamide de l'acide maléique dérivant d'une alkylamine contenant de 1 à 8 atomes de carbone, le rapport des motifs du styrène aux motifs du comonomère dans ledit copolymère étant compris entre 1,5 : 1 et 6 : 1 et le poids moléculaire (en nombre) du copolymère en question étant compris entre 500 et 50 000, ainsi qu'un polyéther porteur de groupes hydroxy qui est liquide ou hydrosoluble dans les conditions normales et a un poids moléculaire (en nombre) compris entre 200 et 6 000, et en ce que le polymère d'ester vinylique a une viscosité spécifique réduite $\eta_{spec}/c$ comprise entre 2 et 30 dl/g (mesurée dans le diméthylformamide à 25°C).

2. Dispersion de matière plastique selon la revendication 1, caractérisée en ce que le polyéther est un homoplymère de l'oxyde de propylène.

3. Dispersion de matière plastique selon la revendication 1, caractérisée en ce que le polymère d'ester vinylique est sous la forme de

particules ayant un diamètre moyen de 0,05 à 1,0 µm.

4. Dispersion de matière plastique selon la revendication 1, caractérisée en ce que le polymère d'ester vinylique est und copolymère de différents esters vinyliques dérivant d'acides monocarboxyliques aliphatiques contenant de 1 à 10 atomes de carbone, ou un copolymère d'un tel ester vinylique et d'un comonomère répondant à la formule:

$$H_2C=C\begin{matrix} \diagup R^5 \\ \diagdown R^6 \end{matrix}$$

dans laquelle $R^5$ représente un atome d'hydrogène, un radical alkyle contenant de 1 à 4 atomes de carbone, un radical alcoxy contenant de 1 à 4 atomes de carbone, un groupe cyano, un atome d'halogène ou un radical alcoxy-carbonyle contenant de 2 à 12 atomes de carbone, et $R^6$ représente un atome d'hydrogène ou un radical méthyle.

5. Dispersion de matière plastique selon la revendication 1, caractérisée en ce qu'elle contient en outre un adjuvant de dispersion qui est un sel poly-(acide acrylique), du poly-(acide méthacrylique), du poly-(acide vinyl-sulfonique) ou de l'acide polyphosphorique, ou un composé organo-phosphoré portant 1, 2, 3 ou 4 groupes phosphono.

6. Procédé de préparation d'une dispersion aqueuse de matière plastique à base d'un polymère d'ester vinylique, procédé caractérisé en ce qu'on polymérise un ester vinylique — éventuellement en association avec un autre monomère copolymérisable — dans des conditions connues, en dispersion aqueuse, et on mélange la dispersion de polymère obtenue avec une solution aqueuse d'un sel d'ammonium ou d'un sel de métal alcalin d'un copolymère du styrène et de l'anhydride maléique ou d'un hémi-ester de l'acide maléique dérivant d'un alcanol contenant de 3 à 20 atomes de carbone ou d'un hémi-amide de l'acide maléique dérivant d'une alkylamine contenant de 1 à 8 atomes de carbone, copolymère dans lequel le rapport des motifs du styrène aux motifs du comonomère est compris entre 1,5 : 1 et 6 : 1 et qui a un poids moléculaire (en nombre) compris entre 500 et 50 000, ainsi qu'avec un polyéther porteur de groupes hydroxy qui est liquide ou hydrosoluble dans les conditions normales et a un poids moléculaire (en nombre) compris entre 200 et 6 000, thout en maintenant le pH de la dispersion de polymère entre 6 et 11.

7. Produit de revêtement qui contient la dispersion de matière plastique selon la revendication 1.

**Revendications pour l'Etat contractant:** AT

1. Procédé de préparation d'une dispersion aqueuse de matière plastique à base d'un polymère d'ester vinylique, procédé caractérisé en ce qu'on polymérise un ester vinylique — éventuellement en association avec un autre monomère copolymérisable — dans des conditions connues, en dispersion aqueuse, et on mélange la dispersion de polymère obtenue avec une solution aqueuse d'un sel d'ammonium ou d'un sel de métal alcalin d'un copolymère du styrène et de l'anhydride maléique ou d'un hémi-ester de l'acide maléique dérivant d'un alcanol contenant de 3 à 20 atomes de carbone ou d'un hémi-amide de l'acide maléique dérivant d'une alkylamine contenant de 1 à 8 atomes de carbone, copolymère dans lequel le rapport des motifs du styrène aux motifs du comonomère est compris entre 1,5 : 1 et 6 : 1 et qui a un poids moléculaire (en nombre) compris entre 500 et 50 000, ainsi qu'avec un polyéther porteur de groupes hydroxy qui est liquide ou hydrosoluble dans les conditions normales et a un poids moléculaire (en nombre) compris entre 200 et 6 000, tout en maintenant le pH de la dispersion de polymère entre 6 et 11.

2. Procédé selon la revendication 1, caractérisé en ce qu'on utilise le sel du copolymère du styrène en une quantité de 0,1 à 20% en poids (par rapport au polymère d'ester vinylique).

3. Procédé selon la revendication 1, caractérisé en ce qu'on utilise, comme polyester, un homopolymère de l'oxyde de propylène.

4. Procédé selon la revendication 1, caractérisé en ce qu'on utilise, comme autre monomère copolymérisable, un composé éthylénique répondant à la formule

$$H_2C=C\begin{matrix} \diagup R^5 \\ \diagdown R^6 \end{matrix}$$

dans laquelle $R^5$ représente un atome d'hydrogène, un radical alkyle contenant de 1 à 4 atomes de carbone, un radical alcoxy contenant de 1 à 4 atomes de carbone, un groupe cyano, un atome d'halogène ou un radical alcoxy-carbonyle contenant de 2 à 12 atomes de carbone, et $R^6$ représente un atome d'hydrogène ou un radical méthyle.

5. Procédé selon la revendication 1, caractérisé en ce qu'on effectue la polymérisation en présence d'un adjuvant de dispersion qui est un sel du poly-(acide acrylique), du poly-(acide méthacrylique), du poly-(acide vinyl-sulfonique) ou de l'acide polyphosphorique, ou un composé organo-phosphoré contenant 1, 2, 3 ou 4 groupes phosphono.